# EUROPÄISCHE PATENTSCHRIFT

(11) **EP 2 673 160 B1**
(45) Veröffentlichungstag und Bekanntmachung des Hinweises auf die Patenterteilung: **12.10.2016**
(21) Anmeldenummer: 11805539.1
(22) Anmeldetag: 29.12.2011
(51) Int. Cl.: B60L 11/18, H02J 7/00, H02M 7/49, H02P 27/06, H02J 7/14, H02J 7/02

(54) **SYSTEM ZUM LADEN EINES ENERGIESPEICHERS UND VERFAHREN ZUM BETRIEB DES LADESYSTEMS**
SYSTEM FOR CHARGING AN ENERGY STORE, AND METHOD FOR OPERATING THE CHARGING SYSTEM
SYSTÈME DE CHARGE D'UN ACCUMULATEUR D'ÉNERGIE ET PROCÉDÉ DE FONCTIONNEMENT DU SYSTÈME DE CHARGE

(30) Priorität: 09.02.2011 DE 102011003861
(43) Veröffentlichungstag der Anmeldung: 18.12.2013
(73) Patentinhaber: Robert Bosch GmbH, 70442 Stuttgart (DE)
(72) Erfinder: FEUERSTACK, Peter, 71642 Ludwigsburg (DE); WEISSENBORN, Erik, 70374 Stuttgart (DE); KESSLER, Martin, 73527 Schwaebisch Gmuend (DE)
(86) Internationale Anmeldenummer: PCT/EP2011/074225
(87) Internationale Veröffentlichungsnummer: WO 2012/107149

(56) Entgegenhaltungen:
- EP-A1- 0 907 238

## Beschreibung

Die Erfindung betrifft ein System zum Laden eines Energiespeichers und ein Verfahren zum Betrieb des erfindungsgemäßen Ladesystems.

### Stand der Technik

Es zeichnet sich ab, dass in Zukunft sowohl bei stationären Anwendungen, wie z.B. Windkraftanlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren. In herkömmlichen Anwendungen wird eine elektrische Maschine, welche z.B. als Drehfeldmaschine ausgeführt ist, über einen Umrichter in Form eines Wechselrichters gesteuert. Kennzeichnend für derartige Systeme ist ein sogenannter Gleichspannungszwischenkreis, über welchen ein Energiespeicher, in der Regel eine Batterie, an die Gleichspannungsseite des Wechselrichters angeschlossen ist. Um die für eine jeweilige Anwendung gegebenen Anforderungen an Leistung und Energie erfüllen zu können, werden mehrere Batteriezellen in Serie geschaltet. Da der von einem derartigen Energiespeicher bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen.

Die Serienschaltung mehrerer Batteriezellen bringt neben einer hohen Gesamtspannung das Problem mit sich, dass der gesamte Energiespeicher ausfällt, wenn eine einzige Batteriezelle ausfällt, weil dann kein Batteriestrom mehr fließen kann. Ein solcher Ausfall des Energiespeichers kann zu einem Ausfall des Gesamtsystems führen. Bei einem Fahrzeug kann ein Ausfall der Antriebsbatterie zum "Liegenbleiben" des Fahrzeugs führen. Bei anderen Anwendungen, wie z.B. der Rotorblattverstellung von Windkraftanlagen, kann es bei ungünstigen Rahmenbedingungen, wie z.B. starkem Wind, sogar zu sicherheitsgefährdenden Situationen kommen. Daher ist stets eine hohe Zuverlässigkeit des Energiespeichers anzustreben, wobei mit "Zuverlässigkeit" die Fähigkeit eines Systems bezeichnet wird, für eine vorgegebene Zeit fehlerfrei zu arbeiten.

In den älteren Anmeldungen DE 10 2010 027857 und DE 10 2010 027861 sind Batterien mit mehreren Batteriemodulsträngen beschrieben, welche direkt an eine elektrische Maschine anschließbar sind. Die Batteriemodulstränge weisen dabei eine Mehrzahl von in Serie geschalteten Batteriemodulen auf, wobei jedes Batteriemodul mindestens eine Batteriezelle und eine zugeordnete steuerbare Koppeleinheit aufweist, welche es erlaubt in Abhängigkeit von Steuersignalen den jeweiligen Batteriemodulstrang zu unterbrechen oder die jeweils zugeordnete mindestens eine Batteriezelle zu überbrücken oder die jeweils zugeordnete mindestens eine Batteriezelle in den jeweiligen Batteriemodulstrang zu schalten. Durch geeignete Ansteuerung der Koppeleinheiten, z.B. mit Hilfe von Pulsweitenmodulation, können auch geeignete Phasensignale zur Steuerung der elektrischen Maschine bereitgestellt werden, so dass auf einen separaten Pulswechselrichter verzichtet werden kann. Der zur Steuerung der elektrischen Maschine erforderliche Pulswechselrichter ist damit sozusagen in die Batterie integriert. Zum Zwecke der Offenbarung werden diese beiden älteren Anmeldungen vollumfänglich in die vorliegende Anmeldung einbezogen.

EP 0 907 238 A1 offenbart eine Schaltungsanordnung zur Ansteuerung eines dreiphasigen Elektromotors. Jede der Phasen wird mit einer PWM-modulierten Spannung aus einer kaskadierbaren Batteriezellenanordnung gespeist. Die Batteriezellen können dabei mittels einer Ladeschaltung aufgeladen werden, wobei die durch die Ladeschaltung bereitgestellte Spannung mittels eines PWM-Konverters an die Batteriespannung angepasst werden kann.

### Offenbarung der Erfindung

Die vorliegende Erfindung schafft ein System zum Laden mindestens einer Energiespeicherzelle in einem steuerbaren Energiespeicher mit den Merkmalen des Patentanspruchs 1.

Die Erfindung schafft außerdem ein Verfahren zum Betreiben eines erfindungsgemäßen Ladesystems, bei dem in einer Stromaufbauphase in den Energieversorgungszweigen eine betragsmäßig geringere Spannung als an der Sekundärseite des Lade-Transformators eingestellt wird und in einer der Stromaufbauphase folgenden Stromabbauphase in den Energieversorgungszweigen eine betragsmäßig höhere Spannung als an der Sekundärseite des Lade-Transformators eingestellt wird.

### Vorteile der Erfindung

Sollen die Energiespeicherzellen des steuerbaren Energiespeichers über einen Ladetransformator geladen werden, so muss die an der Sekundärseite (Sekundärwicklung) eines Ladetransformators anliegende Wechselspannung zunächst gleichgerichtet werden. Die Erfindung basiert auf der Grundidee, die Schaltelemente der als Vollbrücken ausgestalteten Koppeleinheiten zur Gleichrichtung der sekundärseitigen Wechselspannung des Ladetransformators zu nutzen. Dazu wird die Sekundärseite des Lade-Transformators über jeweils eine Lade-Induktivität mit den Energieversorgungszweigen des steuerbaren Energiespeichers verbunden. Die Verbindung erfolgt dabei mittelbar über den Sternpunkt der elektrischen Maschine, wobei die Statorwicklungen der elektrischen Maschine als Lade-Induktivitäten dienen. Die Spannung an der Lade-Induktivität ergibt sich als Differenz zwischen einer Sekundärspannung an der Sekundärseite des Lade-Transformators und der Spannung am steuerbaren Energiespeicher. Realisiert wird die Gleichrichterfunktion nun dadurch, dass die Energiespeicherzellen jeweils mit derjenigen Polarität in den jeweiligen Energieversorgungszweig geschaltet werden, dass sie geladen werden. Dabei wird in einer Stromaufbauphase in den Energieversorgungszweigen eine betragsmäßig geringere Spannung als an der Sekundärseite des Lade-Transformators eingestellt, so dass den Ladeinduktivitäten Energie zugeführt und dort gespeichert wird. In einer der Stromaufbauphase folgenden Stromabbauphase wird in den Energieversorgungszweigen eine betragsmäßig höhere Spannung als an der Sekundärseite des Lade-Transformators eingestellt, wodurch der Ladestrom insgesamt begrenzt wird. Die Spannung in den Energieversorgungszweigen wird dabei jeweils durch die Anzahl der in den jeweiligen Energieversorgungszweig geschalteten Energiespeicherzellen bestimmt. Über beide Phasen, also Stromaufbauphase und Stromabbauphase, hinweg, ergibt sich auf diese Weise insgesamt ein konstanter Ladestrom.

Der Wegfall einer gesonderten Gleichrichtereinheit auf der Sekundärseite des Lade-Transformators führt sowohl zu einer Kosten- als auch zu einer Bauraumersparnis. Einige Schaltnetztopologien, wie beispielsweise eine sogenannte "Dual Active Bridge", erfordern ebenfalls eine steuerbare Vollbrücke auf der Sekundärseite eines Transformators. Derartige Schaltnetztopologien lassen sich mit Hilfe der erfindungsgemäßen Anordnung ebenfalls realisieren.

Sind bei einer Anbindung der Sekundärseite des Lade-Transformators über den Sternpunkt der elektrischen Maschine die Induktivitäten der Statorwicklungen der elektrischen Maschine nicht ausreichend, so kann zwischen die Sekundärseite des Lade-Transformators und die elektrische Maschine eine zusätzliche Ladeinduktivität geschaltet sein.

Unerwünschte Momente während des Ladevorgangs können dadurch vermieden werden, dass die elektrische Maschine während des Ladevorgangs mechanisch blockiert wird, z.B. mit Hilfe einer Getriebesperrklinke. Alternativ kann auch die Rotorlage der elektrischen Maschine überwacht werden, z.B. mit Hilfe einer entsprechenden Sensorik, und im Falle einer detektierten Rotorbewegung abgeschaltet werden.

Das erfindungsgemäße Ladesystem ist galvanisch getrennt ausgeführt und kann auch als induktives Ladegeräte ausgeführt sein, d.h. alle Komponenten vom Netzeingang bis zur Primärwicklung können sich in einem Offboard-Ladegerät befinden und der Transformator kann entsprechend modifiziert, das heißt flächig ausgeführt werden. Beim Einsatz in einem Fahrzeug ergibt sich daraus der Vorteil, dass außer der Sekundärwicklung des Lade-Transformators keine zusätzlichen Bauteile zur Realisierung der Ladefunktion im Fahrzeug mitgeführt werden müssen.

Weitere Merkmale und Vorteile von Ausführungsformen der Erfindung ergeben sich aus der nachfolgenden Beschreibung mit Bezug auf die beigefügten Zeichnung.

### Kurze Beschreibung der Zeichnung

Es zeigt:

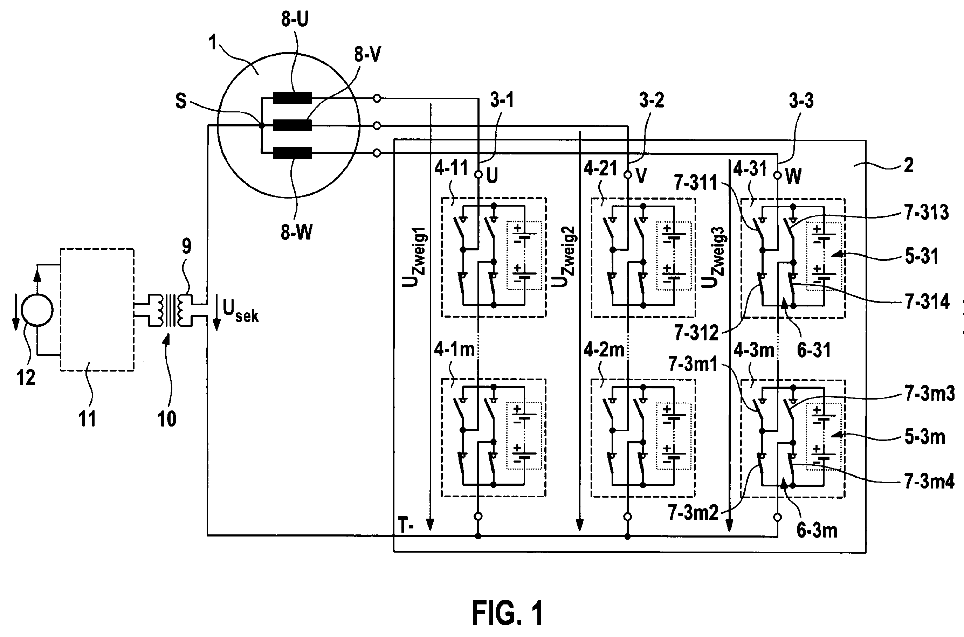

- Fig. 1: eine schematische Darstellung einer Ausführungsform eines erfindungsgemäßen Ladesystems.

### Ausführungsformen der Erfindung

Figur 1 zeigt schematisch eine Ausführungsform eines erfindungsgemäßen Ladesystems. An eine dreiphasige elektrische Maschine 1 ist ein steuerbarer Energiespeicher 2 angeschlossen. Der steuerbare Energiespeicher 2 umfasst drei Energieversorgungszweige 3-1, 3-2 und 3-3, welche einerseits mit einem Bezugspotential T- (Bezugsschiene), welches in den dargestellten Ausführungsformen ein niedriges Potential führt, und andererseits jeweils mit einzelnen Phasen U, V, W der elektrischen Maschine 1 verbunden sind. Jeder der Energieversorgungszweige 3-1, 3-2 und 3-3 weist m in Reihe geschaltete Energiespeichermodule 4-11 bis 4-1 m bzw. 4-21 bis 4-2m bzw. 4-31 bis 4-3m auf, wobei m ≥ 2. Die Energiespeichermodule 4 wiederum umfassen jeweils mehrere in Reihe geschaltete elektrische Energiespeicherzellen, welche aus Gründen der Übersichtlichkeit lediglich in dem mit der Phase W der elektrischen Maschine 1 verbundenen Energieversorgungszweig 3-3 mit Bezugszeichen 5-31 bis 5-3m versehen sind. Die Energiespeichermodule 4 umfassen des Weiteren jeweils eine Koppeleinheit, welche den Energiespeicherzellen 5 des jeweiligen Energiespeichermoduls 4 zugeordnet ist. Aus Gründen der Übersichtlichkeit sind auch die Koppeleinheiten lediglich in dem Energieversorgungszweig 3-3 mit Bezugszeichen 6-31 bis 6-3m versehen. In den dargestellten Ausführungsvarianten werden die Koppeleinheiten 6 jeweils durch vier steuerbare Schaltelemente 7-311, 7-312, 7-313 und 7-314 bis 7-3m1, 7-3m2, 7-3m3 und 7-3m4 gebildet, welche in Form einer Vollbrücke verschaltet sind. Die Schaltelemente können dabei als Leistungshalbleiterschalter, z.B. in Form von IGBTs (Insulated Gate Bipolar Transistors) oder als MOSFETs (Metal Oxide Semiconductor Field-Effect Transistors), ausgeführt sein.

Die Koppeleinheiten 6 ermöglichen es, den jeweiligen Energieversorgungszweig 3, durch Öffnen aller Schaltelemente 7 einer Koppeleinheit 6 zu unterbrechen. Alternativ können die Energiespeicherzellen 5 durch Schließen von jeweils zwei der Schaltelemente 7 einer Koppeleinheit 6 entweder überbrückt werden, z. B. Schließen der Schalter 7-312 und 7-314 oder in den jeweiligen Energieversorgungszweig 3 geschaltet werden, z.B. Schließen der Schalter 7-312 und 7-313.

Die Gesamt-Ausgangsspannungen der Energieversorgungszweige 3-1 bis 3-3 werden bestimmt durch den jeweiligen Schaltzustand der steuerbaren Schaltelemente 7 der Koppeleinheiten 6 und können stufig eingestellt werden. Die Stufung ergibt sich dabei in Abhängigkeit von der Spannung der einzelnen Energiespeichermodule 4. Geht man von der bevorzugten Ausführungsform gleichartig ausgestalteter Energiespeichermodule 4 aus, so ergibt sich eine maximal mögliche Gesamt-Ausgangsspannung aus der Spannung eines einzelnen Energiespeichermoduls 4 mal der Anzahl m der pro Energieversorgungszweig 3 in Reihe geschalteten Energiespeichermodule 4.

Die Koppeleinheiten 6 erlauben es damit, die Phasen U, V, W der elektrischen Maschine 1 entweder gegen ein hohes Bezugspotential oder ein niedriges Bezugspotential zu schalten und können insofern auch die Funktion eines bekannten Wechselrichters erfüllen. Damit können Leistung und Betriebsart der elektrischen Maschine 1 bei geeigneter Ansteuerung der Koppeleinheiten 6 durch den steuerbaren Energiespeicher 2 gesteuert werden. Der steuerbare Energiespeicher 2 erfüllt also insofern eine Doppelfunktion, da er einerseits der elektrischen Energieversorgung andererseits aber auch der Steuerung der elektrischen Maschine 1 dient.

Die elektrische Maschine 1 weist Statorwicklungen 8-U, 8-V und 8-W auf, die in bekannter Weise in Sternschaltung miteinander verschaltet sind.

Die elektrische Maschine 1 ist in dem dargestellten Ausführungsbeispiel als dreiphasige Drehstrommaschine ausgeführt, kann aber auch weniger oder mehr als drei Phasen aufweisen. Nach der Phasenanzahl der elektrischen Maschine richtet sich natürlich auch die Anzahl der Energieversorgungszweige 3 in dem steuerbaren Energiespeicher 2.

In den dargestellten Ausführungsbeispielen weist jedes Energiespeichermodul 4 jeweils mehrere in Reihe geschaltete Energiespeicherzellen 5 auf. Die Energiespeichermodule 4 können aber alternativ auch jeweils nur eine einzige Energiespeicherzelle oder auch parallel geschaltete Energiespeicherzellen aufweisen.

In dem dargestellten Ausführungsbeispiel werden die Koppeleinheiten 6 jeweils durch vier steuerbare Schaltelemente 7 in Form einer Vollbrücke gebildet, was auch die Möglichkeit einer Spannungsumkehr am Ausgang des Energiespeichermoduls bietet.. Die Koppeleinheiten 6 können aber auch durch mehr oder weniger steuerbare Schaltelemente realisiert sein, solange die notwendigen Funktionen (Überbrücken der Energieversorgungszellen und Schalten der Energieversorgungszellen in den Energieversorgungszweig) realisierbar sind.

Um die Ladung von Energiespeicherzellen 5 eines oder mehrerer Energiespeichermodule 4 zu ermöglichen, wird gemäß der dargestellten Ausführungsform der Erfindung eine Sekundärseite eines Lade-Transformators 10 einerseits mit einem Sternpunkt S der elektrischen Maschine 1 und andererseits mit der Bezugsschiene T- verbunden.

Primärseitig ist dem Lade-Transformator 10 eine Schalteinheit 11, z.B. in Form eine Halb- oder Vollbrücke vorgeschaltet, welche die Primärseite des Lade-Transformators 10 mit einer Wechselspannungsquelle 12 verbindet.

An einer Sekundärwicklung 9 des Lade-Transformators 10 liegt eine Wechselspannung an, welche gleichgerichtet werden muss, um als Ladespannung für eine oder mehrere Energiespeicherzellen 5 des steuerbaren Energiespeichers 2 dienen zu können. Mit Hilfe der in Vollbrückentopologie ausgestalteten Koppeleinheiten 6 des steuerbaren Energiespeichers 2 ist es nun möglich, die Gleichrichtungsfunktion ohne eine separate Gleichrichtereinheit zu realisieren. Dazu werden die zu ladenden Energiespeicherzellen 5 durch entsprechende Steuerung der Schaltelemente 7 der jeweils zugeordneten Koppeleinheit 6 mit jeweils der Polarität in den jeweiligen Energieversorgungszweig 3 geschaltet, dass sie geladen werden.

Zur Ladung der Energiespeicherzellen 5 sind darüber hinaus Lade-Induktivitäten erforderlich, welche im Fall der Anbindung des Lade-Transformators 10 über den Sternpunkt S der elektrischen Maschine 1 durch die Motorwicklungen 8-U, 8-V und 8-W gebildet werden. Sind die Induktivitäten der Motorwicklungen 8-U, 8-V und 8-W nicht ausreichend, so kann zwischen die Sekundärseite des Lade-Transformators 10 und die elektrische Maschine 1 eine nicht dargestellte Ladeinduktivität geschaltet sein.

Eine Spannung U_{L} über einer Motorwicklung 8-U, 8-V, 8-W ergibt sich als Differenz zwischen einer Sekundärspannung Uₛₑₖ auf der Sekundärseite des Lade-Transformators 10 und einer Strangspannung U_{zweig1} bzw. U_{Zweig2} bzw. U_{zweig3} an dem jeweils zugeordneten Energieversorgungszweig 3-1 bzw. 3-2 bzw. 3-3. Die Ladung von Energiespeicherzellen 5 erfolgt in zwei Phasen.

In einer Stromaufbauphase muss die Spannung U_{L} positiv sein (UL > 0), um Ladeenergie in der jeweiligen Lade-Induktivität in Form der jeweiligen Motorwicklung 8 zu speichern. Dies kann erreicht werden, indem am jeweiligen Energieversorgungszweig 3 eine betragsmäßig geringere Spannung als die Sekundärspannung Uₛₑₖ eingestellt wird (|U_{zweig}| < |Uₛₑₖ|). Die Strangspannung U_{zweig} ist abhängig von der Anzahl der zugeschalteten Energiespeicherzellen 5 in dem jeweiligen Energieversorgungszweig 3 und kann somit durch gezieltes Zu- und/oder Wegschalten von Energiespeicherzellen 5 mit Hilfe der Koppeleinheiten 6 aktiv beeinflusst werden. Dabei kann auch der Gradient des Ladestroms über die jeweils eingestellte Strangspannung U_{zweig} gesteuert werden.

Um den Ladestrom nicht beliebig ansteigen zu lassen, folgt der Stromaufbauphase eine Stromabbauphase, in welcher die Spannung U_{L} negativ ist (UL < 0), so dass die in der jeweiligen Motorwicklung 8 gespeicherte Energie wieder abgegeben wird. Dies kann erreicht werden, indem am jeweiligen Energieversorgungszweig 3 eine betragsmäßig höhere Spannung als die Sekundärspannung Uₛₑₖ eingestellt wird (|U_{zweig}| > |Uₛₑₖ|). Auch dieses Spannungsverhältnis wird wiederum durch gezieltes Zu- und/oder Wegschalten von Energiespeicherzellen 5 mit Hilfe der Koppeleinheiten 6 eingestellt.

Über beide Phasen, also Stromaufbau- und Stromabbauphase hinweg, ergibt sich dadurch ein konstanter Ladestrom.

Unerwünschte Momente während des Ladevorgangs können dadurch vermieden werden, dass die elektrische Maschine 1 während des Ladevorgangs mechanisch blockiert wird, z.B. mit Hilfe einer Getriebesperrklinke. Alternativ kann auch die Rotorlage der elektrischen Maschine 1 überwacht werden, z.B. mit Hilfe einer entsprechenden Sensorik, und im Falle einer detektierten Rotorbewegung abgeschaltet werden.

## Patentansprüche

1. System zum Laden mindestens einer Energiespeicherzelle (5) in einem steuerbaren Energiespeicher (2), welcher der Steuerung und der elektrischen Energieversorgung einer n-phasigen elektrischen Maschine (1), mit n ≥ 1, dient, wobei
- der steuerbare Energiespeicher (2) n parallele Energieversorgungszweige (3-1, 3-2, 3-3) aufweist, welche
▪ jeweils mindestens zwei in Reihe geschaltete Energiespeichermodule (4) aufweisen, welche jeweils mindestens eine elektrische Energiespeicherzelle (5) mit einer zugeordneten steuerbaren Koppeleinheit (6) umfassen,
▪ einerseits mit einer Bezugsschiene (T-) verbindbar sind und
▪ andererseits mit jeweils einer Phase (U, V, W) der elektrischen Maschine (1) verbindbar sind, und
- die Koppeleinheiten (6) als Vollbrücken ausgestaltet sind und in Abhängigkeit von Steuersignalen die jeweils zugeordneten Energiespeicherzellen (5) überbrücken oder die jeweils zugeordneten Energiespeicherzellen (5) in den jeweiligen Energieversorgungszweig (3-1, 3-2; 3-3) schalten,
**dadurch gekennzeichnet, dass**
- ein Sternpunkt (S) der elektrischen Maschine (1) einerseits und die Bezugsschiene (T-) andererseits mit einer Sekundärseite (9) eines Lade-Transformators (10) verbindbar sind,
- wobei die Koppeleinheiten (6) dazu ausgelegt sind, in einer Stromaufbauphase in den Energieversorgungszweigen (3-1, 3-2; 3-3) eine betragsmäßig geringere Spannung als an der Sekundärseite (9; 9-1'; 9-1"; 9-2'; 9-2"; 9-3'; 9-3") des Lade-Transformators (10; 10'; 10") einzustellen, und in einer der Stromaufbauphase folgenden Stromabbauphase in den Energieversorgungszweigen (3-1, 3-2; 3-3) eine betragsmäßig höhere Spannung als an der Sekundärseite (9; 9-1'; 9-1"; 9-2'; 9-2"; 9-3'; 9-3") des Lade-Transformators (10; 10'; 10") einzustellen.

2. System nach Anspruch 1, wobei zwischen die Sekundärseite (9) des Lade-Transformators (10) und den Stempunkt (S) der elektrischen Maschine eine zusätzliche Ladeinduktivität schaltbar ist.

3. Verfahren zum Betreiben eines Ladesystems nach einem der Ansprüche 1 oder 2.

## Claims

1. System for charging at least one energy storage cell (5) in a controllable energy store (2) which is used to control and supply electrical energy to an n-phase electrical machine (1), where n ≥ 1, wherein
- the controllable energy store (2) has n parallel energy supply branches (3-1, 3-2, 3-3), which
▪ have in each case at least two energy storage modules (4), which are connected in series and comprise in each case at least one electrical energy storage cell (5) having an associated controllable coupling unit (6),
▪ can be connected on one side to a reference rail (T-) and
▪ can be connected on the other side to in each case one phase (U, V, W) of the electrical machine (1), and
- the coupling units (6) are configured as full bridges and, depending on control signals, bypass the respectively associated energy storage cells (5) or connect the respectively associated energy storage cells (5) into the respective energy supply branch (3-1, 3-2, 3-3),
**characterized in that**
- a star point (5) of the electrical machine (1) at one end and the reference rail (T-) at the other can be connected to a secondary side (9) of a charging transformer (10),
- wherein the coupling units (6) are configured, in a current increase stage in the energy supply branches (3-1, 3-2, 3-3), to set a voltage which is smaller in terms of magnitude than that at the secondary side (9; 9-1'; 9-1''; 9-2'; 9-2''; 9-3'; 9-3'') of the charging transformer (10; 10'; 10'') and, in a current reduction stage following the current increase stage in the energy supply branches (3-1, 3-2, 3-3), to set a voltage which is greater in terms of magnitude than that at the secondary side (9; 9-1'; 9-1''; 9-2'; 9-2''; 9-3'; 9-3'') of the charging transformer (10; 10'; 10'').

2. System according to Claim 1, wherein an additional charging inductance can be connected between the secondary side (9) of the charging transformer (10) and the star point (S) of the electrical machine.

3. Method for operating a charging system according to either of Claims 1 and 2.

## Revendications

1. Système pour charger au moins une cellule d'accumulateur d'énergie (5) dans un accumulateur d'énergie commandable (2), lequel sert à la commande et à l'alimentation en énergie électrique d'une machine électrique (1) à n phases, avec n ≥ 1,
- l'accumulateur d'énergie commandable (2) possédant n branches d'alimentation en énergie (3-1, 3-2, 3-3) en parallèle qui
* possèdent respectivement au moins deux modules d'accumulateur d'énergie (4) branchés en série, lesquels comprennent respectivement au moins une cellule d'accumulateur d'énergie (5) avec une unité de connexion (6) commandable associée,
* peuvent être reliées d'un côté à une barre-bus de référence (T-) et
* peuvent être reliées de l'autre côté respectivement à une phase (U, V, W) de la machine électrique (1), et
- les unités de connexion (6) étant configurées sous la forme de ponts complets et, en fonction de signaux de commande, court-circuitent les cellules d'accumulateur d'énergie (5) respectivement associées ou commutent les cellules d'accumulateur d'énergie (5) respectivement associées dans la branche d'alimentation en énergie (3-1, 3-2, 3-3) correspondante,
**caractérisé en ce que**
- un point neutre (S) de la machine électrique (1) d'un côté et la barre-bus de référence (T-) de l'autre côté peuvent être reliés à un côté secondaire (9) d'un transformateur de charge (10),
- les unités de connexion (6) étant conçues pour, dans une phase d'établissement du courant, régler dans les branches d'alimentation en énergie (3-1, 3-2 ; 3-3) une tension à la valeur plus faible que du côté secondaire (9 ; 9-1' ; 9-1''; ; 9-2' ; 9-2'' ; 9-3' ; 9-3'') du transformateur de charge (10 ; 10' ; 10''), et dans une phase de suppression du courant qui suit la phase d'établissement du courant, régler dans les branches d'alimentation en énergie (3-1, 3-2 ; 3-3) une tension à la valeur plus élevée que du côté secondaire (9 ; 9-1' ; 9-1''; 9-2' ; 9-2''; 9-3' ; 9-3") du transformateur de charge (10 ; 10' ; 10'').

2. Système selon la revendication 1, une inductance de charge supplémentaire pouvant être commutée entre le côté secondaire (8) du transformateur de charge (10) et le point neutre (S) de la machine électrique.

3. Procédé pour faire fonctionner un système de charge selon l'une des revendications 1 ou 2.
